(19) Europäisches Patentamt / European Patent Office / Office européen des brevets

(11) **EP 2 512 859 B1**

(12) **EUROPÄISCHE PATENTSCHRIFT**

(45) Veröffentlichungstag und Bekanntmachung des Hinweises auf die Patenterteilung:
**24.07.2013 Patentblatt 2013/30**

(21) Anmeldenummer: **10768780.8**

(22) Anmeldetag: **21.10.2010**

(51) Int Cl.:
**B60L 11/18** (2006.01)   **B60L 15/20** (2006.01)
**G05B 19/416** (2006.01)   **H02P 23/00** (2006.01)
**H02P 23/14** (2006.01)

(86) Internationale Anmeldenummer:
**PCT/EP2010/065849**

(87) Internationale Veröffentlichungsnummer:
**WO 2011/082851 (14.07.2011 Gazette 2011/28)**

(54) **VERFAHREN ZUR STEUERUNG EINES ELEKTROMOTORS**

METHOD FOR CONTROLLING AN ELECTRIC VEHICLE

PROCÉDÉ DE COMMANDE D'UN VÉHICULE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2009 DE 102009054603**

(43) Veröffentlichungstag der Anmeldung:
**24.10.2012 Patentblatt 2012/43**

(73) Patentinhaber: **Robert Bosch GmbH**
**70442 Stuttgart (DE)**

(72) Erfinder:
• **MERKEL, Tino**
**71701 Schwieberdingen (DE)**
• **KRETSCHMER, Markus**
**71711 Murr (DE)**
• **GOETTING, Gunther**
**70469 Stuttgart (DE)**

(56) Entgegenhaltungen:
**EP-A2- 0 514 847    EP-A2- 1 926 204**
**US-A- 5 534 764    US-A- 5 610 483**
**US-A- 5 834 912**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Steuerung eines Elektromotors zum Antrieb eines Kraftfahrzeuges gemäß dem Oberbegriff des Anspruches 1 und einen Antriebsstrang für ein Kraftfahrzeug gemäß dem Oberbegriff des Anspruches 14.

Stand der Technik

Elektromotoren werden für verschiedene technische Anwendungen eingesetzt. Beispielsweise in Elektro- oder Hybridfahrzeugen werden Elektromotoren zum Antrieb des Kraftfahrzeuges eingesetzt. Zur Bestromung der Elektromotoren ist es erforderlich, die Drehzahl bzw. den Drehwinkel eines Rotors des Elektromotors zu erfassen. Hierzu ist der Elektromotor mit einem entsprechenden Sensor zur Erfassung des Drehwinkels ausgestattet. Aus dem erfassten Drehwinkel kann die Winkelgeschwindigkeit und/oder die Winkelbeschleunigung des Rotors berechnet werden. Als Sensoren zur Erfassung des Drehwinkels werden Resolver oder Digitalsensoren eingesetzt. Resolver sind analoge Messgeräte, die eine dem Drehwinkel des Rotors bzw. des Elektromotors proportionale Spannung induzieren. Dadurch kann der Drehwinkel und die Winkelgeschwindigkeit, insbesondere bei geringen Drehzahlen, beispielsweise weniger als 1000 U/min sehr genau erfasst werden. Allerdings sind Resolver bei hohen Drehzahlen fehleranfällig, da die Auswertung der durch die Drehbewegung induzierten Analogspannung ungenau werden kann. Im Gegensatz dazu geben Digitalsensoren, auch als Inkrementalgeber bezeichnet, ein digitales Signal aus, welches zusammen mit einer Zeitfunktion in ein Drehzahlsignal umgerechnet werden kann. Digitalsensoren zeichnen sich durch eine hohe Robustheit aus und sind damit insbesondere für einen Einsatz in Elektro- oder Hybridfahrzeugen gut geeignet. Allerdings haben Digitalsensoren den Nachteil, dass bei niedrigen Drehzahlen die Zahl der gemessenen Inkremente pro Zeiteinheit gering sein kann und dadurch bei geringen Drehzahlen nur eine sehr geringe Genauigkeit des erfassten Drehwinkels vorliegt. Eine hohe Genauigkeit des von dem Digitalsensor gemessenen Drehwinkels ist jedoch erforderlich, um das Drehmoment einstellen zu können für die Bestromung des Elektromotors.

Aus der DE 41 22 391 A1 ist ein Verfahren zum Betrieb eines drehzahlregelbaren elektrischen Motors, insbesondere eines bürstenlosen Servomotors, bekannt. Durch Regelung der Motorgrößen Strom, Lagewinkel und Drehzahl wird die Drehzahl aus dem mittels eines Lagegebers gemessenen Lagewinkels durch einen Filter bestimmt. Die Aufnahme des Rechenmodells von Traktionsmaschine und Antriebsstrang dient in den Dokumenten US 5610483 US 5534764 zur Verbesserung der Fahrdynamik des elektrisch angetriebenen Fahrzeugs.

Offenbarung der Erfindung

Vorteile der Erfindung

Erfindungsgemäßes Verfahren zur Steuerung zum Antrieb eines Kraftfahrzeuges mittels eines Antriebsstranges mit den Schritten: mehrfaches Messen des Drehwinkels eines Rotors des Elektromotors, Ermitteln der Winkelgeschwindigkeit und/oder der Winkelbeschleunigung des Rotors in Abhängigkeit von dem erfassten Drehwinkel, Steuern und/oder Regeln der Bestromung von Elektromagneten als Spulen eines Stators des Elektromotors, wobei das physikalische Verhalten, insbesondere mechanische Verhalten, des Elektromotors und/oder des Antriebsstranges und/oder des Kraftfahrzeuges in einem physikalischen Modell, insbesondere mechanischen Modell, erfasst werden und aus den gemessenen Werten des Drehwinkels des Rotors mit dem physikalischen Modell der Drehwinkel und/oder die Winkelgeschwindigkeit und/oder die Winkelbeschleunigung ermittelt wird und die Bestromung von Elektromagneten bzw. Spulen des Stators des Elektromotors in Abhängigkeit von dem mit dem physikalischen Modell ermittelten Drehwinkel und/oder Winkelgeschwindigkeit und/oder Winkelbeschleunigung ausgeführt wird.

In einem physikalischen Modell wird das physikalische Verhalten, insbesondere das mechanische Verhalten bezüglich einer Rotations- und/oder einer Translationsbewegung, des Elektromotors und/oder des Antriebsstranges und/oder des Kraftfahrzeuges erfasst. Die gemessenen Werte des Drehwinkels des Rotors werden, insbesondere bei einer niedrigen Drehzahl des Rotors, mittels des physikalischen Modells überprüft, so dass mit dem physikalischen Modell die gemessenen Werte des Drehwinkels die Grundlage bilden für ermittelte Werte oder berechnete Werte des Drehwinkels und/oder der Winkelgeschwindigkeit und/oder der Winkelbeschleunigung des Rotors des Elektromotors. Die ermittelten oder berechneten Werte des Drehwinkels und/oder der Winkelgeschwindigkeit und/oder der Winkelbeschleunigung sind dabei den tatsächlichen Werten näher angenähert, so dass damit eine höhere Genauigkeit an Werten für den Drehwinkel und/oder die Winkelgeschwindigkeit und/oder die Winkelbeschleunigung für den Rotor vorliegt. Mittels dieser genaueren Werte wird die Bestromung der Elektromagnete des Stators durchgeführt. Als Sensor zur Erfassung des Drehwinkels des Rotors wird beispielsweise ein Resolver oder ein Digitalsensor eingesetzt. Insbesondere bei Digitalsensoren treten bei niedriger Drehzahl große Fehler auf. Mittels dieses physikalischen Modells kann somit bei niedrigen Drehzahlen die geringe Genauigkeit des Digitalsensors ausgeglichen werden und somit können Digitalsensoren aufgrund ihrer Robustheit auch in Elektro- und Hybridfahrzeugen eingesetzt werden.

Insbesondere ist das physikalische Modell ein Zweimassenschwinger oder ein elektrischer Schwingkreis mit einer ersten Masse als Elektromotor, einer zweiten Masse als Kraftfahrzeug und einer Drehstabfeder als Antriebsstrang zwischen der ersten Masse und der zweiten Masse und/oder die Winkelgeschwindigkeit eines Antriebsrades wird erfasst und die erfasste Winkelgeschwindigkeit des Antriebsrades wird in dem physikalischen Modell berücksichtigt.

In einer weiteren Ausführungsform wird für das Modell ein Rotationsträgheitsmoment der ersten Masse, ein Ersatzrotationsträgheitsmoment der zweiten Masse sowie eine Ersatzfedersteifigkeit und/oder eine Ersatzdämpfungskonstante der Drehstabfeder bestimmt. Das Rotationsträgheitsmoment der ersten Masse ist das Rotationsträgheitsmoment des Rotors des Elektromotors. Das Ersatzrotationsträgheitsmoment der zweiten Masse ist ein fiktiver Wert, der dahingehend ermittelt wird, dass die Masse des Kraftfahrzeuges, d. h. das Massenträgheitsmoment des Kraftfahrzeuges bezüglich einer Translationsbewegung in ein fiktives Ersatzrotationsträgheitsmoment einer Rotationsbewegung umgerechnet wird. Diejenigen Komponenten des Kraftfahrzeuges, die eine Rotationsbewegung ausführen, insbesondere die Antriebsräder, werden bei diesem Ersatzrotationsträgheitsmoment mitberücksichtigt. Die Ersatzfedersteifigkeit gibt dabei die Torsion des Antriebsstranges in Abhängigkeit von dem Drehmoment an und die Ersatzdämpfungskonstante gibt das Schwingungsdämpfungsverhalten des Antriebsstranges an. Das Rotationsträgheitsmoment, das Ersatzträgheitsrotationsträgheitsmoment, die Ersatzfedersteifigkeit und die Ersatzdämpfungskonstante sind im Allgemeinen aus der konstruktiven Auslegung eines Kraftfahrzeuges bekannt und können somit für ein Kraftfahrzeug berechnet werden.

In einer ergänzenden Ausführungsform wird in dem physikalischen Modell der zusätzliche Fahrwiderstand des Kraftfahrzeuges berücksichtigt. Zusätzliche Fahrwiderstände können beim Betreiben eines Kraftfahrzeuges auftreten. Beispielsweise das Fahren mit Berg- oder Talfahrt oder eine zusätzliche Beladung des Kraftfahrzeuges führen zu zusätzlichen Fahrwiderständen. Auch diese können in dem physikalischen Modell erfasst werden, indem diese mitberücksichtigt werden. Erhöht sich beispielsweise der Fahrwiderstand aufgrund einer Bergfahrt, kann fiktiv kurzzeitig das Ersatzrotationsträgheitsmoment der zweiten Masse in dem physikalischen Modell so lange erhöht werden, wie die Bergfahrt anhält. Umgekehrt kann bei einer Talfahrt das fiktive Ersatzrotationsträgheitsmoment für diesen Zeitraum reduziert werden.

Vorzugsweise wird das Drehmoment des Elektromotors berücksichtigt. Aus der Steuerung und/oder Regelung des Elektromotors ist das Drehmoment bekannt, welches von dem Elektromotor aufgebracht wird. Auch dieses Drehmoment kann dabei mitberücksichtigt werden in dem physikalischen Modell.

In einer Variante werden der zusätzliche Fahrwiderstand und/oder die Ersatzfedersteifigkeit mittelbar oder unmittelbar iterativ aus den gemessenen oder ermittelten Werten des Drehwinkels des Rotors ermittelt. Der zusätzliche Fahrwiderstand ist eine Größe, die nicht konstruktiv in dem Kraftfahrzeug vorgegeben ist. Durch das ständige und mehrfache Messen des Drehwinkels und der davon abgeleiteten Größen, d. h. der Winkelbeschleunigung und der Winkelgeschwindigkeit des Rotors, kann mit Hilfe des physikalischen Modells der zusätzliche Fahrwiderstand berechnet werden. Abweichend hiervon kann der zusätzliche Fahrwiderstand auch mittels Sensoren, beispielsweise eines Sensors zur Erfassung einer Berg- und/oder Talfahrt, erfasst werden. Dieser zusätzliche Fahrwiderstand fließt dabei in das physikalische Modell ein, so dass dadurch zusätzlich die Genauigkeit der berechneten Werte für den Drehwinkel und/oder die Winkelgeschwindigkeit und/oder die Winkelbeschleunigung erhöht werden, weil dadurch mehrere und zusätzliche Parameter vorliegen. Damit wird das physikalische Modell wesentlich genauer und kann die tatsächlichen mechanischen Verhältnisse besser und genauer abbilden.

Zweckmäßig wird bei der Ermittlung oder Berechnung des zusätzlichen Fahrwiderstandes das Drehmoment des Elektromotors verwendet.

In einer weiteren Ausführungsform wird bei der Ermittlung oder Berechnung des zusätzlichen Fahrwiderstandes das Rotationsträgheitsmoment der ersten Masse und/oder das Ersatzrotationsträgheitsmoment der zweiten Masse und/oder die Ersatzfedersteifigkeit und/oder die Ersatzdämpfungskonstante der Drehstabfeder verwendet.

Insbesondere resultiert der zusätzliche Fahrwiderstand aus einer Beladung des Kraftfahrzeuges und/oder aus einer Bergfahrt oder Talfahrt des Kraftfahrzeuges.

In einer weiteren Ausgestaltung wird bei der Ermittlung des Drehwinkels und/oder der Winkelgeschwindigkeit und/oder der Winkelbeschleunigung des Rotors aus den gemessenen Werten des Drehwinkels für die Bestromung von Elektromagneten des Stators der zusätzliche Fahrwiderstand berücksichtigt.

In einer ergänzenden Variante wird die Bestromung von Elektromagneten des Stators in Abhängigkeit von dem zusätzlichen Fahrwiderstand ausgeführt.

In einer weiteren Variante wird der zusätzliche Fahrwiderstand mit einem nichtlinearen Gleichungssystem iterativ berechnet.

In einer weiteren Ausgestaltung sind in dem nichtlinearen Gleichungssystem das Rotationsträgheitsmoment der ersten Masse und/oder das Ersatzrotationsträgheitsmoment der zweiten Masse und/oder die Ersatzfedersteifigkeit und/oder die Ersatzdämpfungskonstante der Drehstabfeder enthalten.

Erfindungsgemäße Antriebseinrichtung, insbesondere Hybridantriebseinrichtung, für ein Kraftfahrzeug, umfassend: einen Elektromotor mit einem Sensor zur Erfassung des Drehwinkels eines Rotors des Elektromotors, eine Steuerungseinheit, vorzugsweise einen Verbrennungsmotor, einen Antriebsstrang, wobei ein in dieser Schutzrechtsanmeldung beschriebenes Verfahren ausführbar ist.

Insbesondere ist der Sensor ein Resolver oder ein Digitalsensor.

Kurze Beschreibung der Zeichnungen

Im Nachfolgenden wird ein Ausführungsbeispiel der Erfindung unter Bezugnahme auf die beigefügten Zeichnungen näher beschrieben. Es zeigt:

Fig. 1    eine stark schematisierte Darstellung eine Antriebseinrichtung

Fig. 2    einen Längsschnitt eines Elektromotors,

Fig. 3    eine Ansicht eines Zweimassenschwingers,

Fig. 4    ein Diagramm des Drehwinkels eines Rotors des Elektromotors in Abhängigkeit von der Zeit und

Fig. 5    eine Seitenansicht eines Kraftfahrzeuges.

Ausführungsformen der Erfindung

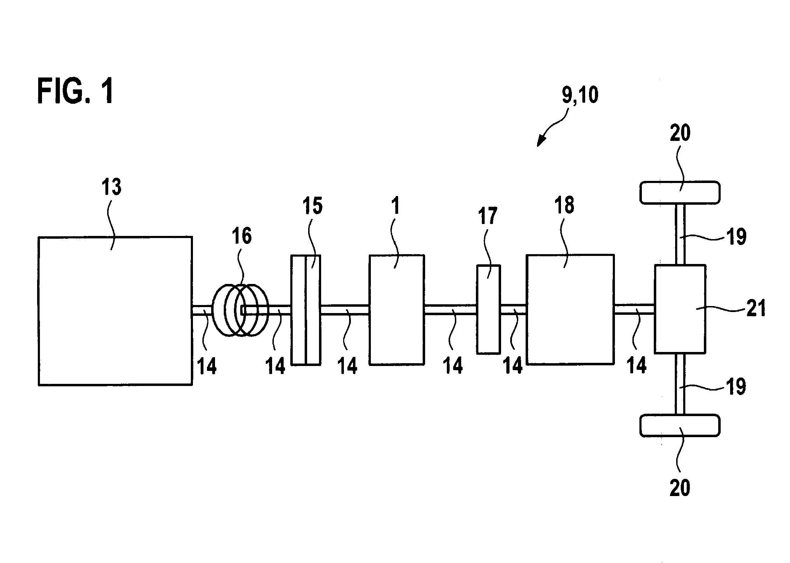

In Fig. 1 ist eine als Hybridantriebseinrichtung 10 ausgebildete Antriebseinrichtung 9 für ein Kraftfahrzeug 11 dargestellt. Die Hybridantriebseinrichtung 10 für das Kraftfahrzeug 11 umfasst einen Verbrennungsmotor 13 sowie einen Elektromotor 1 zum Antreiben des Kraftfahrzeuges 11. Der Verbrennungsmotor 13 und der Elektromotor 1 sind mittels einer Antriebswelle 14 miteinander verbunden. Die mechanische Koppelung zwischen dem Verbrennungsmotor 13 und dem Elektromotor 1 kann mittels einer Kupplung 15 hergestellt und aufgehoben werden. Ferner ist in der Antriebswelle 14, welche den Verbrennungsmotor 13 und den Elektromotor 1 miteinander koppelt, eine Elastizität 16 angeordnet. Der Elektromotor 1 ist mit einem Differentialgetriebe 21 mechanisch gekoppelt. In der Antriebswelle 14, welche den Elektromotor 1 und das Differentialgetriebe 21 miteinander verbindet, ist ein Wandler 17 und ein Getriebe 18 angeordnet. Mittels des Differentialgetriebes 21 werden durch Seitenwellen 19 die Antriebsräder 20 angetrieben.

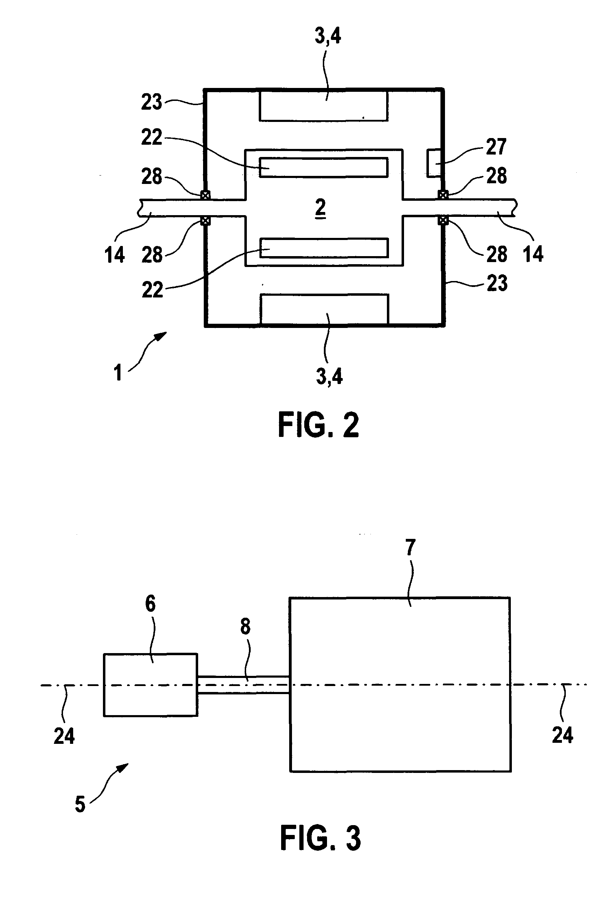

In Fig. 2 ist ein Längsschnitt des Elektromotors 1 dargestellt. Der Elektromotor 1 weist einen Rotor 2 auf und einen Stator 3 mit Elektromagneten 4 als Spulen 4 auf. Der Rotor 2 bildet zusammen mit der Antriebswelle 14 eine Baueinheit und an dem Rotor 2 sind Permanentmagnete 22 angeordnet. Elektromagnete 4 des Stators 3 sind an einem Gehäuse 23 des Elektromotors 1 gelagert und das Gehäuse 23 ist mittels einer Lagerung 28 an der Antriebswelle 14 gelagert. Der Elektromotor 1 ist außerdem mit einem als Digitalsensor ausgebildeten Sensor 27 zur Erfassung des Drehwinkels des Rotors 2 bzw. der Antriebswelle 14 ausgestattet. Für die Bestromung der Elektromagnete 4 des Stators 3 ist eine genaue Kenntnis des Drehwinkels bzw. der Winkelgeschwindigkeit des Rotors 2 erforderlich. Mittels des Sensors 27 wird der Drehwinkel $\varphi_E$ des Rotors 2 gemessen. Bei geringen Drehzahlen des Rotors 2 weisen die Messergebnisse des Sensors 27 nur eine geringe Genauigkeit auf. Mittels eines nachfolgenden beschriebenen physikalischen Modells werden die von dem Sensor 27 gemessenen Werte des Drehwinkels $\varphi_E$ verbessert, so dass mit den berechneten Werten des Drehwinkels $\varphi_E$ eine höhere Genauigkeit vorliegt und damit die Bestromung der Elektromagnete 4 genauer erfolgen kann.

In Fig. 3 ist ein Zweimassenschwinger 5 abgebildet. Der Zweimassenschwinger 5 ist ein Rotationsschwinger dessen erste Masse 6 und zweite Masse 7 um eine Rotationsachse 24 eine Rotationsbewegung fiktiv ausführen. Die erste Masse 6 ist mit der zweiten Masse 7 mittels einer Drehstabfeder 8 verbunden. Das Rotationsträgheitsmoment $J_1$ der ersten Masse 6 entspricht dabei dem Rotationsträgheitsmoment $J_1$ des Elektromotors 1 bzw. des Rotors 2 des Elektromotors 1. In dem in Fig. 1 dargestellten Komponenten der Antriebseinrichtung 9 führen beispielsweise die Antriebswelle 14, Teile des Getriebes 18, Teile des Differentialgetriebes 21, die Seitenwelle 19 und das Antriebswelle 20 eine Rotationsbewegung aus. Das Rotationsträgheitsmoment dieser Komponenten ist aufgrund der konstruktiven Auslegung des Kraftfahrzeuges 11 bekannt und kann berechnet werden. Das Kraftfahrzeug 11 führt dabei eine Translationsbewegung aus. Bei einer Translationsbewegung des Kraftfahrzeuges tritt ein Massenträgheitsmoment auf. Dieses Massenträgheitsmoment der Masse des Kraftfahrzeuges 11, welche eine Translationsbewegung ausführt, wird dabei in ein Ersatzrotationsträgheitsmoment $J_2$ des Kraftfahrzeuges 11 umgerechnet. Das Ersatzrotationsträgheitsmoment $J_2$ der zweiten Massen 7 in dem Zweimassenschwinger 5 entspricht dabei dem aus dem Massenträgheitsmoment des Kraftfahrzeuges 11 mit einer Translationsbewegung umgerechneten Ersatzträgheitsmoment sowie dem Rotationsträgheitsmoment der Komponenten der Antriebseinrichtung 9 mit einer Rotationsbewegung, beispielsweise die Antriebswelle 14 und die Seitenwelle 19.

Beim Aufbringen eines Drehmomentes von dem Elektromotor 1 auf die Antriebswelle 14 führt dieses Drehmoment zu einer Torsion von Komponenten der Antriebseinrichtung 9. Insbesondere die Antriebswelle 14 und die Seitenwelle 19 werden dabei tordiert, so dass es hier zu einer seitlichen Verzögerung kommt zwischen der Rotationsbewegung des Elektromotors 1 und der Rotationsbewegung der Antriebsräder 20 kommt. In dem physikalischen Modell wird dies mittels der Ersatzfedersteifigkeit c des Antriebsstranges 12 berücksichtigt. Der Antriebsstrang 12 sind insbesondere die Komponenten der Antriebseinrichtung 9 ohne den Elektromotor 1 und den Verbrennungsmotor 13. Komponenten des Antriebsstranges 12 weisen außerdem auch eine schwingungsdämpfende Eigenschaft auf, die in dem physikalischen Modell gemäß dem Zweimassenschwinger 5 in Fig. 3 durch die Ersatzdämpfungskonstante d berücksichtigt wird. Beim Betrieb des Kraftfahrzeuges 11 treten außerdem zusätzliche Fahrwiderstände F auf. Diese können beispielsweise aus einer Bergfahrt resultieren oder bei einer Talfahrt können negative Fahrwiderstände F auftreten. Auch eine Erhöhung der Beladung des Kraftfahrzeuges 11 führt zu zusätzlichen Fahrwiderständen F. Diese Fahrwiderstände F werden in dem physikalischen Modell mit dem Zweimassenschwinger 5 dadurch berücksichtigt, dass temporär das Ersatzrotationsträgheitsmoment $J_2$ der zweiten Masse 7 erhöht oder verringert wird.

Der Drehwinkel $\varphi_E$ des Rotors 2 wird von dem Sensor 27 erfasst. Ferner mit einem nicht dargestellten Sensor der Drehwinkel $\varphi_F$ der zweiten Masse 7 bzw. des Antriebsrades 20 erfasst. Dabei werden diese Werte sehr häufig, beispielsweise mehrere hundert Mal innerhalb einer Sekunde, gemessen und anschließend die gemessenen Werte in das physikalische Modell gemäß dem Zweimassenschwinger 5 eingebracht. Hierzu werden die nachfolgenden Gleichungen benutzt:

$$\alpha_E(t) \; = \; c/J_1 \, {}^* \, [\, \varphi_E(t) - \varphi_F(t)] \; - \; d/\, J_1 \, {}^* \, [\, \omega_E(t) - \omega_F(t)] + 1/\, J_1 \, {}^* \, u(t)$$

$$\alpha_F(t) \; = \; c/J_2 \, {}^* \, [\, \varphi_E(t) - \varphi_F(t)] \; + \; d/\, J_2 \, {}^* \, [\, \omega_E(t) - \omega_F(t)] - F/\, J_2$$

$$\omega_E(t) \; = \; \varphi_E{}'(t) \; \; ; \; \; \omega_F(t) = \varphi_F{}'(t)$$

Aus diesen Gleichungen kann somit die Winkelbeschleunigung $\alpha_E$ der ersten Masse 6 bzw. des Rotors 2 und die Winkelbeschleunigung $\alpha_F$ der zweiten Massen 7 berechnet werden. Dabei werden auch das Drehmoment u(t) des Elektromotors 1 mitberücksichtigt. Das Drehmoment u(t) des Elektromotors 1 wird von der Regelung des Elektromotors 1 zur Bestromung zur Verfügung gestellt bzw. kann hieraus berechnet werden. Die Winkelgeschwindigkeit $\omega_E$ der ersten Masse 6 ist dabei die zeitliche Ableitung ($\varphi_E{}'(t)$) des Drehwinkels $\varphi_E$ der ersten Masse 6 und die Winkelgeschwindigkeit $\omega_F$ der zweiten Masse 7 ist dabei die zeitliche Ableitung ($\varphi_F{}'(t)$) des Drehwinkels $\varphi_F$ der zweiten Masse 7. Es handelt sich somit um ein lineares Gleichungssystem.

In diesem nachfolgenden nichtlinearen Gleichungssystem sind die Ersatzfedersteifigkeit $c=x_1$ des Antriebsstranges 12 und auch der Fahrwiderstand $F=x_2$ des Kraftfahrzeuges 11 unbekannte Größen:

$$\alpha_E(t) \; = \; x_1/J_1 \, {}^* \, [\, \varphi_E(t) - \varphi_F(t)] \; - \; d/\, J_1 \, {}^* \, [\, \omega_E(t) - \omega_F(t)] + 1/\, J_1 \, {}^* \, u(t)$$

$$\alpha_F(t) \; = \; x_1/J_2 \, {}^* \, [\, \varphi_E(t) - \varphi_F(t)] \; + \; d/\, J_2 \, {}^* \, [\, \omega_E(t) - \omega_F(t)] - x_2/\, J_2$$

Durch die hohe Anzahl der Messungen des Drehwinkels $\varphi_E$ und vorzugsweise auch des Drehwinkels $\varphi_F$ kann durch eine iterative Berechnung der Fahrwiderstand $F=x_2$ und vorzugsweise auch die Ersatzfedersteifigkeit $c=x_1$ berechnet werden. Abweichend hiervon kann auch nur der Fahrwiderstand $F=x_2$ berechnet werden und die Ersatzfedersteifigkeit c wird als konstante und konstruktiv bekannte Größe nicht berechnet (nicht dargestellt im obigen Gleichungssystem). Aufgrund dieser ständigen Berechnungen des Fahrwiderstandes F und der Ersatzfedersteifigkeit c kann das physikalische Modell weiter verbessert und verfeinert werden, so dass dadurch die berechneten Werte für den Drehwinkel $\varphi_E$ bzw. die Winkelgeschwindigkeit $\omega_E$ der ersten Masse 6, welche dem Rotor 2 entspricht, weiter verbessert werden. Damit liegen Werte $\varphi_E$ für den Drehwinkel und die Winkelgeschwindigkeit $\omega_E$ des Rotors 2 in einer hohen Genauigkeit vor, insbesondere auch bei einer niedrigen Drehzahl des Elektromotors 1. Dadurch kann die Bestromung der Elektromagnete 4 des Stators 3 mit eine hohen Genauigkeit erfolgen, obwohl der Sensor 7 relativ ungenau Ergebnisse für den Drehwinkel $\varphi_E$ des Rotors 2 ausgibt. Unter der Bestromung der Elektromagnete 4 werden der Strom und/oder die Spannung des durch die Elektromagnete 4 geleiteten Stromes und/oder die Zeiten eines Durchleitens von Strom durch die Elektromagnete 4 verstanden.

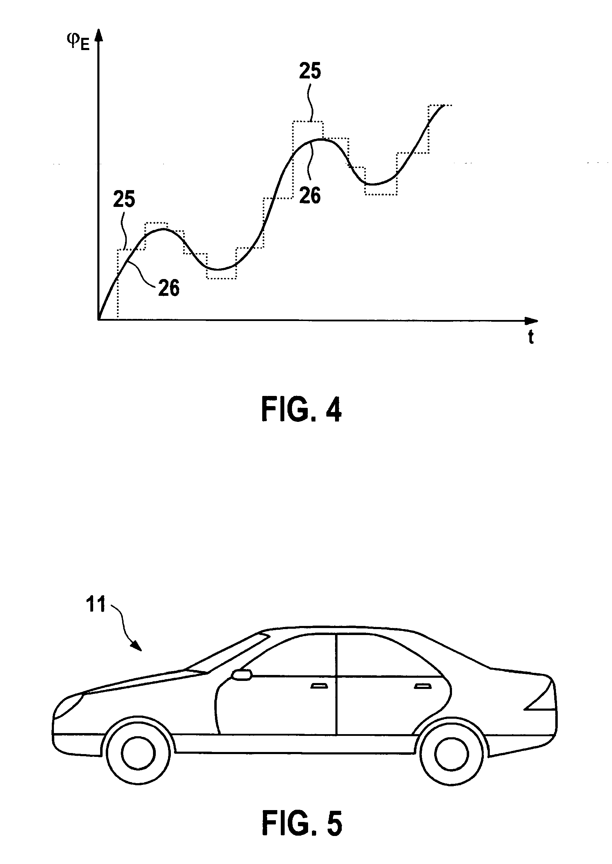

In Fig. 4 sind in einem Diagramm der Drehwinkels $\varphi_E$ des Rotors 2 des Elektromotors 1 in Abhängigkeit von der Zeit angetragen. In der Kurve 25 sind die gemessenen Werte und in der Kurve 26 die mit dem physikalischen Modell berechneten Werte des Drehwinkels $\varphi_E$ des Rotors 2 angegeben. Die berechneten Werte entsprechen den tatsächlichen Werten wesentlich genauer als die gemessenen Werte.

Insgesamt betrachtet sind mit dem erfindungsgemäßen Verfahren zur Steuerung eines Elektromotors 4 wesentliche Vorteile verbunden. Der Elektromotor 1 weist einen Digitalsensor als Sensor 27 zur Erfassung des Drehwinkels $\varphi_E$ des Rotors 2 auf. Dieser Sensor 27 stellt bei geringen Drehzahlen des Elektromotors 1 nur Messwerte mit einer geringen Genauigkeit zur Verfügung. Mittels des physikalischen Modells können diese ungenauen Messergebnisse aufbereitet und verfeinert werden, so dass aus den berechneten Werten für die Bestromung des Elektromotors 1 Drehwinkel $\varphi_E$ mit einer hohen Genauigkeit vorliegen. Damit können Digitalsensoren, insbesondere aufgrund ihrer robusten Eigenschaften, auch in Kraftfahrzeugen 11 mit einer Hybridantriebseinrichtung 10 eingesetzt werden, ohne dass bei geringen Drehzahlen die Bestromung der Elektromagnete 4 mit einer geringen Genauigkeit erfolgt.

**Patentansprüche**

1.   Verfahren zur Steuerung eines Elektromotors (1) zum Antrieb eines Kraftfahrzeuges (11) mittels eines Antriebsstranges (12) mit den Schritten:

- mehrfaches Messen des Drehwinkels eines Rotors (2) des Elektromotors (1),
- Ermitteln der Winkelgeschwindigkeit und/oder der Winkelbeschleunigung des Rotors (2) in Abhängigkeit von dem erfassten Drehwinkel,
- Steuern und/oder Regeln der Bestromung von Elektromagneten (4) eines Stators (3) des Elektromotors (1),
- das physikalische Verhalten des Elektromotors (1) und/oder des Antriebsstranges (12) und/oder des Kraftfahrzeuges (11) in einem physikalischen Modell erfasst werden ,
**dadurch gekennzeichnet, dass**
- aus den gemessenen Werten des Drehwinkels des Rotors (2) mit dem physikalischen Modell der Drehwinkel und/oder die Winkelgeschwindigkeit und/oder die Winkelbeschleunigung ermittelt wird und
- die Bestromung von Elektromagneten (4) des Stators (3) des Elektromotors (1) in Abhängigkeit von dem mit dem physikalischen Modell ermittelten Drehwinkel und/oder Winkelgeschwindigkeit und/oder Winkelbeschleunigung ausgeführt wird, wobei
- in dem physikalischen Modell der zusätzliche Fahrwiderstand des Kraftfahrzeuges (11) berücksichtigt wird.

2.   Verfahren nach Anspruch 1, **dadurch gekennzeichnet, dass** das physikalische Modell ein Zweimassenschwinger (5) ist mit einer ersten Masse (6) als Elektromotor (1), einer zweiten Masse (7) als Kraftfahrzeug (11) und einer Drehstabfeder (8) als Antriebsstrang (12) zwischen der ersten Masse (6) und der zweiten Masse (7) und/oder die Winkelgeschwindigkeit eines Antriebsrades (20) erfasst wird und die erfasste Winkelgeschwindigkeit des Antriebsrades (20) in dem physikalischen Modell berücksichtigt wird.

3.   Verfahren nach Anspruch 2, **dadurch gekennzeichnet, dass** für das physikalische Modell ein Rotationsträgheitsmoment der ersten Masse (6), ein Ersatzrotationsträgheitsmoment der zweiten Masse (7) sowie eine Ersatzfedersteifigkeit und/oder eine Ersatzdämpfungskonstante der Drehstabfeder (8) bestimmt wird.

4.   Verfahren nach einem oder mehreren der vorhergehenden Ansprüche, **dadurch gekennzeichnet, dass** das Drehmoment des Elektromotors (1) berücksichtigt wird.

5.   Verfahren nach Anspruch 1 oder 4, **dadurch gekennzeichnet, dass** der zusätzliche Fahrwiderstand und/oder die Ersatzfedersteifigkeit mittelbar oder unmittelbar iterativ aus den gemessenen oder ermittelten Werten des Drehwinkels des Rotors (2) ermittelt werden.

6. Verfahren nach Anspruch 5, **dadurch gekennzeichnet, dass** bei der Ermittlung oder Berechnung des zusätzlichen Fahrwiderstandes das Drehmoment des Elektromotors (1) verwendet wird.

7. Verfahren nach Anspruch 5 oder 6, **dadurch gekennzeichnet, dass** bei der Ermittlung oder Berechnung des zusätzlichen Fahrwiderstandes das Rotationsträgheitsmoment der ersten Masse (1) und/oder das Ersatzrotationsträgheitsmoment der zweiten Masse (7) und/oder die Ersatzfedersteifigkeit und/oder die Ersatzdämpfungskonstante der Drehstabfeder (8) verwendet wird.

8. Verfahren nach einem oder mehreren der Ansprüche 1 bis 7, **dadurch gekennzeichnet, dass** der zusätzliche Fahrwiderstand aus einer Beladung des Kraftfahrzeuges (11) und/oder aus einer Bergfahrt oder Talfahrt des Kraftfahrzeuges (11) resultiert.

9. Verfahren nach einem oder mehreren der Ansprüche 1 bis 8, **dadurch gekennzeichnet, dass** bei der Ermittlung des Drehwinkels und/oder der Winkelgeschwindigkeit und/oder der Winkelbeschleunigung des Rotors (2) aus den gemessenen Werten des Drehwinkels für die Bestromung von Elektromagneten (4) des Stators (3) der zusätzliche Fahrwiderstand berücksichtigt wird.

10. Verfahren nach einem oder mehreren der Ansprüche 1 bis 9, **dadurch gekennzeichnet**, das die Bestromung von Elektromagneten (4) des Stators (3) in Abhängigkeit von dem zusätzlichen Fahrwiderstand ausgeführt wird.

11. Verfahren nach einem oder mehreren der Ansprüche 1 bis 10, **dadurch gekennzeichnet, dass** der zusätzliche Fahrwiderstand mit einem nichtlinearen Gleichungssystem iterativ berechnet wird.

12. Verfahren nach Anspruch 11, **dadurch gekennzeichnet, dass** in dem nichtlinearen Gleichungssystem das Rotationsträgheitsmoment der ersten Masse (6) und/oder das Ersatzrotationsträgheitsmoment der zweiten Masse (7) und/oder die Ersatzfedersteifigkeit und/oder die Ersatzdämpfungskonstante der Drehstabfeder (8) enthalten sind.

13. Antriebseinrichtung (9), insbesondere Hybridantriebseinrichtung (10), für ein Kraftfahrzeug (11), umfassend:

    - einen Elektromotor (1) mit einem Sensor (27) zur Erfassung des Drehwinkels eines Rotors (2) des Elektromotors (1),
    - vorzugsweise einen Verbrennungsmotor (13),
    - einen Antriebsstrang (12),

    **dadurch gekennzeichnet, dass** ein Verfahren gemäß einem oder mehrerer der vorhergehenden Ansprüche ausführbar ist.

14. Antriebseinrichtung nach Anspruch 13, **dadurch gekennzeichnet, dass** der Sensor (27) ein Resolver (27) oder ein Digitalsensor (27) ist.


**Claims**

1. Method for controlling an electric motor (1) for driving a motor vehicle (11) by means of a drive train (12), comprising the following steps:

    - repeatedly measuring the rotational angle of a rotor (2) of the electric motor (1),
    - determining the angular speed and/or the angular acceleration of the rotor (2) as a function of the detected rotational angle,
    - performing open-loop and/or closed-loop control of the energization of electromagnets (4) of a stator (3) of the electric motor (1),
    - the physical behaviour of the electric motor (1) and/or of the drive train (12) and/or of the motor vehicle (11) is detected in a physical model, **characterized in that**
    - the rotational angle and/or the angular speed and/or the angular acceleration are/is determined from the measured values of the rotational angle of the rotor (2) with the physical model, and
    - electromagnets (4) of the stator (3) of the electric motor (1) are energized as a function of the rotational angle and/or angular speed and/or angular acceleration which are/is determined with the physical model, wherein
    - the additional driving resistance of the motor vehicle (11) is taken into account in the physical model.

2. Method according to Claim 1, **characterized in that** the physical model is a two-mass oscillator (5) with a first mass (6) as an electric motor (1), a second mass (7) as a motor vehicle (11) and a torsion bar (8) as a drive rod (12) between the first mass (6) and the second mass (7), and/or the angular speed of a drive wheel (20) is sensed, and the sensed angular speed of the drive wheel (20) is taken into account in the physical model.

3. Method according to Claim 2, **characterized in that**, for the physical model, a moment of rotational inertia of the first mass (6), an equivalent moment of rotational inertia of the second mass (7) and an equivalent spring stiffness and/or an equivalent damping constant of the torsion bar (8) are/is determined.

4. Method according to one or more of the preceding claims, **characterized in that** the torque of the electric motor (1) is taken into account.

5. Method according to Claim 1 or 4, **characterized in that** the additional driving resistance and/or the equivalent spring stiffness are/is determined indirectly or directly in an iterative fashion from the measured or determined values of the rotational angle of the rotor (2).

6. Method according to Claim 5, **characterized in that** the torque of the electric motor (1) is used in the determination or calculation of the additional driving resistance.

7. Method according to Claim 5 or 6, **characterized in that** the moment of rotational inertia of the first mass (6) and/or the equivalent moment of rotational inertia of the second mass (7) and/or the equivalent spring stiffness and/or the equivalent damping constant of the torsion bar (8) are/is used in the determination or calculation of the additional driving resistance.

8. Method according to one or more of Claims 1 to 7, **characterized in that** the additional driving resistance results from loading the motor vehicle (11) and/or from uphill travel or downhill travel of the motor vehicle (11).

9. Method according to one or more of Claims 1 to 8, **characterized in that** the additional driving resistance is taken into account in the determination of the rotational angle and/or the angular speed and/or the angular acceleration of the rotor (2) from the measured values of the rotational angle for the energization of electromagnets (4) of the stator (3).

10. Method according to one or more of Claims 1 to 9, **characterized in that** the energization of electromagnets (4) of the stator (3) is carried out as a function of the additional driving resistance.

11. Method according to one or more of Claims 1 to 10, **characterized in that** the additional driving resistance is calculated in an iterative fashion with a non-linear equation system.

12. Method according to Claim 11, **characterized in that** the non-linear equation system contains the moment of rotational inertia of the first mass (6) and/or the equivalent moment of rotational inertia of the second mass (7) and/or the equivalent spring stiffness and/or the equivalent damping constant of the torsion bar (8).

13. Drive device (9), in particular a hybrid drive device (10), for a motor vehicle (11), comprising:

   - an electric motor (1) having a sensor (27) for sensing the rotational angle of a rotor (2) of the electric motor (1),
   - preferably an internal combustion engine (13),
   - a drive train (12),

   **characterized in that** a method can be carried out according to one or more of the preceding claims.

14. Drive device according to Claim 13, **characterized in that** the sensor (27) is a resolver (27) or a digital sensor (27).

**Revendications**

1. Procédé de commande d'un moteur électrique (1) destiné à entraîner un véhicule automobile (11) au moyen d'un train d'entraînement (12), le procédé comportant les étapes qui consistent à :

mesurer plusieurs fois l'angle de rotation du rotor (2) du moteur électrique (1),

déterminer la vitesse angulaire et/ou l'accélération angulaire du rotor (2) en fonction de l'angle de rotation saisi,

commander et/ou réguler l'alimentation en courant d'électroaimants (4) du stator (3) du moteur électrique (1),

saisir le comportement physique du moteur électrique (1) et/ou du train d'entraînement (12) et/ou du véhicule automobile (11) dans un modèle physique, **caractérisé en ce que**

l'angle de rotation, la vitesse angulaire et/ou l'accélération angulaire sont déterminés à partir des données mesurées de l'angle de rotation du rotor (2) et à l'aide du modèle physique,

l'alimentation en courant des électroaimants (4) du stator (3) du moteur électrique (1) est réalisée en fonction de l'angle de rotation, de la vitesse angulaire et/ou de l'accélération angulaire déterminés à l'aide du modèle physique,

la résistance au roulage du véhicule automobile (11) étant de plus prise en compte dans le modèle physique.

2. Procédé selon la revendication 1, **caractérisé en ce que** le modèle physique est un oscillateur (5) à deux masses dont la première masse (6) est le moteur électrique (1), la deuxième masse (7) est le véhicule (11) et un ressort (8) à barreau rotatif est le train d'entraînement (12) situé entre la première masse (6) et la deuxième masse (7) et/ou la vitesse angulaire d'une roue motrice (20), la vitesse angulaire de la roue motrice (20) ainsi saisie étant prise en compte dans le modèle physique.

3. Procédé selon la revendication 2, **caractérisé en ce que** le modèle physique détermine le moment d'inertie de la première masse (6), le moment d'inertie équivalent de la deuxième masse (7) ainsi qu'une rigidité élastique équivalente et/ou une constance d'amortissement équivalente du ressort (8) à barreau rotatif.

4. Procédé selon l'une ou plusieurs des revendications précédentes, **caractérisé en ce que** le couple de rotation du moteur électrique (1) est pris en compte.

5. Procédé selon les revendications 1 ou 4, **caractérisé en ce que** la résistance supplémentaire au roulage et/ou la rigidité élastique équivalente sont déterminées directement ou indirectement par itérations à partir des valeurs mesurées ou déterminées de l'angle de rotation du rotor (2).

6. Procédé selon la revendication 5, **caractérisé en ce que** le couple de rotation du moteur électrique (1) est utilisé lors de la détermination ou du calcul de la résistance supplémentaire au roulage.

7. Procédé selon les revendications 5 ou 6, **caractérisé en ce que** le moment d'inertie de la première masse (6), le moment d'inertie équivalent de la deuxième masse (7), la rigidité élastique équivalente et/ou la constante d'amortissement équivalente du ressort (8) à barreau rotatif sont utilisés dans la détermination ou le calcul de la résistance supplémentaire au roulage.

8. Procédé selon l'une ou plusieurs des revendications 1 à 7, **caractérisé en ce que** la résistance supplémentaire au roulage résulte de la charge du véhicule automobile (11) et/ou d'un déplacement en montée ou en descente du véhicule automobile (11).

9. Procédé selon l'une ou plusieurs des revendications 1 à 8, **caractérisé en ce que** la résistance supplémentaire au roulage est prise en compte à partir des valeurs mesurées de l'angle de rotation dans la détermination de l'angle de rotation, de la vitesse angulaire et/ou de l'accélération angulaire du rotor (2) en vue de l'alimentation en courant des électroaimants (4) du stator (3).

10. Procédé selon l'une ou plusieurs des revendications 1 à 9, **caractérisé en ce que** l'alimentation en courant des électroaimants (4) du stator (3) est réalisée en fonction de la résistance supplémentaire au roulage.

11. Procédé selon l'une ou plusieurs des revendications 1 à 10, **caractérisé en ce que** la résistance supplémentaire du roulage est calculée par itérations à l'aide d'un système d'équations non linéaires.

12. Procédé selon la revendication 11, **caractérisé en ce que** le moment d'inertie de la première masse (6), le moment d'inertie équivalent de la deuxième masse (7), la rigidité élastique équivalente et/ou la constante d'amortissement équivalente du ressort (8) en barreau rotatif sont repris dans le système d'équations non linéaires.

13. Dispositif d'entraînement (9), en particulier dispositif d'entraînement hybride (10) pour un véhicule automobile (11), le dispositif comprenant :

un moteur électrique (1) doté d'une sonde (27) de mesure de l'angle de rotation du rotor (2) du moteur électrique (1),
de préférence un moteur à combustion interne (13),
un train d'entraînement (12),
**caractérisé en ce que**
un procédé selon l'une ou plusieurs des revendications précédentes peut y être exécuté.

14. Dispositif d'entraînement selon la revendication 13, **caractérisé en ce que** la sonde (27) est un résolveur (27) ou une sonde numérique (27).

**FIG. 1**

EP 2 512 859 B1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4122391 A1
- US 5610483 A
- US 5534764 A